# EUROPEAN PATENT APPLICATION

(11) **EP 3 760 178 A1**
(43) Date of publication of application: **06.01.2021**
(21) Application number: 19761652.7
(22) Date of filing: 14.02.2019
(51) Int. Cl.: A61H 15/00, F16H 1/00

(54) **MASSAGE DEVICE**

(30) Priority: 27.02.2018 RU 2018107234
(71) Applicant: Obshchestvo s Ogranichennoy Otvetstvennostyu «Ekonomicheskiye Elektroresheniya», Moscow 105523 (RU)
(72) Inventor: LEDENKOV, Denis Alekseyevich, Khimki, 141406 (RU)
(74) Representative: Jeck, Anton
(86) International application number: PCT/RU2019/050018
(87) International publication number: WO 2019/168444

(57) **Abstract**

The invention relates to the field of mechanical means for giving a massage. The present device provides the possibility of more precisely apportioning a load on an area being massaged. The device employs an essentially novel configuration for a massage device, consisting of a movable part that is a hollow massage drum in the form of shafts having massage elements rotatably fastened thereon, wherein the shafts are fastened to bases, a first base being rotatably fastened to a device casing, and a second base being connected to a reduction gear output element, the input element of said reduction gear being fastened to a shaft of an electric motor, and the electric motor being fastened to the casing and disposed inside of the hollow massage drum.

## Description

The invention relates to the field of mechanical devices for physiotherapeutic treatments and/or home massage, spa treatments, sports massage, and can be used for local massage both alone, and using massage oils and physiotherapy devices.

Electrically driven massage devices that are known from the background are usually designed either as vibration excitation means in massage devices that are in direct contact with the user's skin or as rotating massage drums with a drive installed in a handle that is installed on a shaft, on one side of rotation planes of a drum end elements. A disadvantageous feature of vibration massage devices of the known type is a limited functionality due to the fact that vibration actions are not always permissible in recovery treatments, and in some cases they are directly contraindicated. A disadvantageous feature of devices with rotating movement of massage elements is an inconvenience of use, as a traditional handle does not allow for correctly setting the pressure on the skin due to the fact that, when using such a device, a torque is applied to the handle, the value of which depends, among other things, on the distance between a drum and the hand holding a handle.

The device that is closest to the invention proposed that is disclosed in international application WO2007122656 (cl. A61H15/02, publ. on November 1^{st}, 2007), which describes a vibration massage device consisting of a movable part with spherical elements and a drive, e.g., an electric motor installed on the fixed device handle.

A disadvantageous feature of such massage device design is its suboptimal, overly complicated structure.

The technical problem which the present invention aims to solve consists in eliminating disadvantageous features mentioned above and creating a simple and reliable massage device.

The effect of the invention consists in increasing the device reliability and power along with providing the ability of more accurate dosing the load on the massage area, reducing the acoustic noise level, and simplifying a device in general.

The above effect of the invention is achieved through using a fundamentally new configuration of the massage device consisting of a movable part that is a hollow massage drum made in form of shafts having massage elements rotatably fastened thereon wherein herein the shafts are fastened to bases, a first base being rotatably fastened to a device casing, and a second base being connected to a reduction gear output element, the input element of said reduction gear being fastened to a shaft of an electric motor, and the electric motor being fastened to the casing and disposed inside of the hollow massage drum.

A reduction gear can be designed as a reduction gear where an output element is its terminal gear, and an input element is its primary gear. In this case, the reduction gear can contain an idler gear fastened to a device casing or a planetary reduction gear with a carrier fastened to a device casing, whereas a terminal gear of a reduction gear is formed by its ring gear, or designed as a satellite. A reduction gear can also be designed as a combined one and consisting of a belt reducer and a gear reducer connected in series, wherein a second base is connected to an output element designed as a terminal gear of a reduction gear, a primary gear is connected to an output shaft of a belt reducer, which primary pulley is an input element and fastened to an electric motor.

The end part of a device has preferably a control unit installed to adjust the rotations speed of an electric motor. A device is preferably equipped with a display configured to indicate its operation parameters. Massage elements are preferably installed chequerwise on the drum shafts.

The summary of the invention is illustrated by the following figures:
Fig. 1: a longitudinal sectional view of a massage device with decorative housing removed.
Fig. 2: a cross section of a massage device with decorative housing removed.
Fig. 3: general view of a massage drum.
Fig. 4: an electric motor of the proposed device with a combined reduction gear
Fig. 5: general view of a massage device with a display and decorative housing removed.
Fig. 6: general view of a massage device with decorative housing installed and an additional handle.

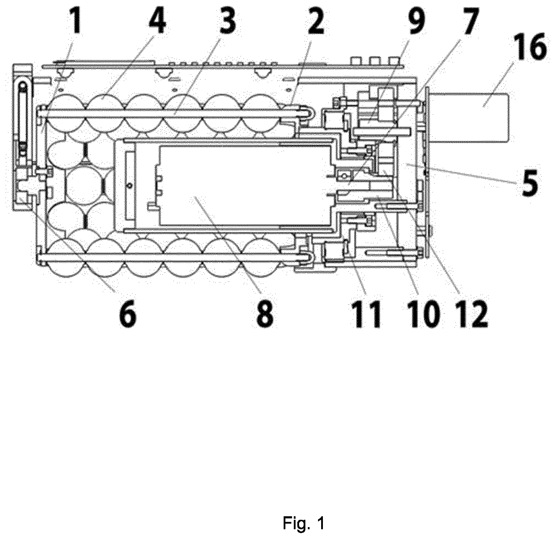

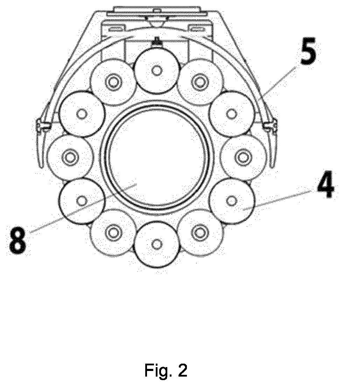

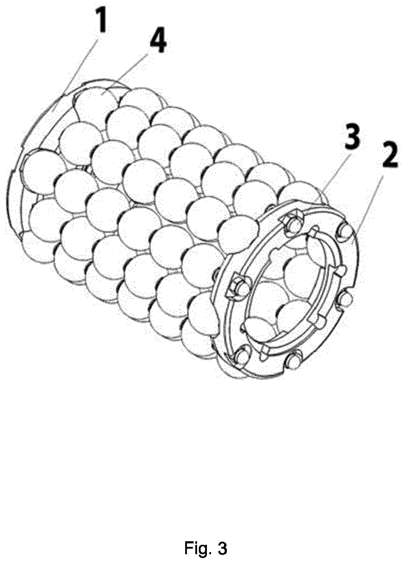

The massage device proposed includes a massage drum (Fig. 3) consisting of first ring-shaped base 1 and second ring-shaped base 2, fastened on shafts 3. On shafts 3, chequerwise-arranged massage elements freely rotate, e.g., in the form of balls 4. First ring 1 is rotatably fastened to device casing 5 (Fig. 1-2) using plain bearing 6. Second base 2 is connected with its external or internal surface to an output element of a reduction gear, which input element is fastened to shaft 7 of electric motor 8. Electric motor 8 is fastened to device casing 5 and installed inside a drum.

Fig. 1 shows a reduction gear designed as a reduction gear with idler gear 9 fastened to device casing 5 and installed between an input element designed as its primary gear 10 and an output element designed as terminal gear 11. A device is equipped with free gears 12 that prevent, together with idler gear 9, a drum movement in a direction transverse to rotation shafts.

In other embodiment of the invention, a reduction gear can be designed as a planetary reduction gear with a carrier fastened to device casing 5, wherein a terminal gear is formed by its ring gear or designed as a satellite.

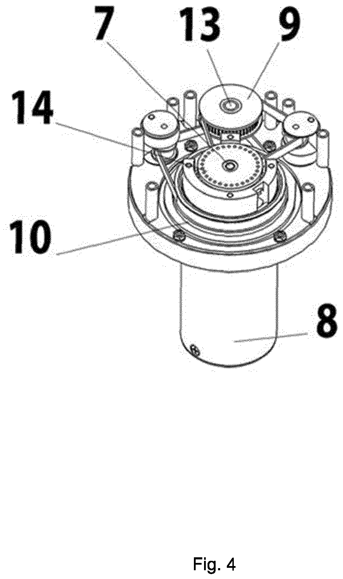

In addition a reduction gear may be designed as a combined one and consisting of a belt reducer and a gear reducer connected in series (Fig. 4). In this case second base 2 is connected to an output element designed as terminal gear 10 of a reduction gear, primary gear 9 of which is connected to output shaft 13 of a belt reducer, which primary pulley 14 is an input element and fastened to shaft 7 of electric motor 8.

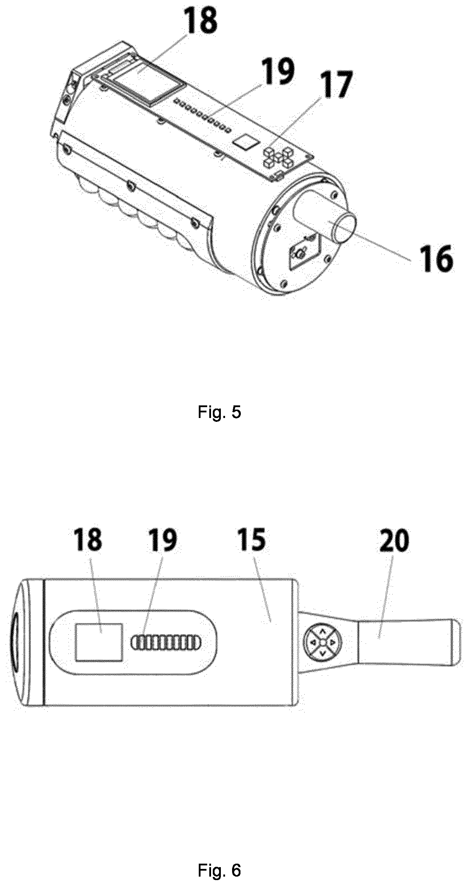

The massage device can be equipped with external decorative housing 15 and control unit 16 installed, in a particular variant of the embodiment, at its end, to adjust the rotation speed of shaft 7 of electric motor 8 (Fig. 1,5). The device can be equipped with control panel 17 with display 18 displaying the set operating modes and the current parameters of the device, and battery charge indicator 19 (Fig. 6). Control unit 16 allows not only for turning its speed on and off, but also for setting up the device operation modes wherein the rotation speed of shaft 7 of electric motor 8 automatically changes in time, and the power is turned off upon reaching the preset time. The device can also include a microcontroller (not shown in the drawings) providing the ability to operate the device in several preset modes, as well as additional handle 20.

The device can be additionally equipped with LED emitters emitting an intense red light for light therapy of the skin. A combined mechanical and light action on the skin increases the light penetration depth and enhances the effect of both massage and light therapy.

The device operates as follows.

When the supply voltage is applied to electric motor 8, which can be designed as a brush or brushless (stepper, synchronous, or asynchronous) motor, the device drum starts rotating, and the device is ready for operation. The massage effect is provided by moving balls 4 of the device on the user's skin surface. Due to the fact that the pressure applied to the device and the torque generated on the drum are directly felt by the hand holding housing 15, the massage effect on the user's skin is more accurate than when using traditional massage devices.

Due to the fact that electric motor 8 is installed inside the rotating drum, and terminal gear 10 of the reduction gear is designed without intermediate shaft, it became possible to use a sufficiently powerful motor and a high-performance reduction gear with a low noise level. This provides for more comfortable treatments and a stable controlled torque.

The advantage provided by the proposed device is the beneficial effect and reducing the time spent by the user for massage. This invention provides a treatment effect on the skin and subcutaneous tissues in order to restore blood circulation, to enhance the connective tissue resistance and elasticity, to provide deep muscle relaxation using high and low frequency mechanical vibrations. The therapy involving the proposed invention can be used as a medicine of joint pain, especially in the areas of shoulders, occiput, and neck, for the treatment of muscle contractures and scars, during massage for participation in sports events, for treatment, as well as in the process of preparation to and recovery after surgery. In addition, the device can be used to treat diseases of the lymphatic system, to stimulate feet, to activate blood circulation, to treat venous insufficiency and thrombophlebitis.

Another objective of the invention is the safer use of the massage device to prevent user's injuries in case of failures of the electromechanical components of the device. In addition, the proposed device design according to the invention provides an even distribution of loads on the device components, as well as their maximum durability. In addition to massage balls, other massage elements designed not only as rotating bodies, such as cones and cylinders, as well as elements with protrusions, such as stars or spheres with cone-shaped protrusions can be used in the device. The massage elements themselves can be arranged not only chequerwise, but also in any other order, whereas the massage elements arrangement order can be chosen empirically taking into account the user's needs or taking into account the adjustment required when using the device.

## Claims

1. Massage device consisting of a movable part that is a hollow massage drum in the form of shafts having massage elements rotatably fastened thereon wherein the shafts are fastened to bases, a first base being rotatably fastened to a device casing, and a second base being connected to a reduction gear output element, the input element of said reduction gear being fastened to a shaft of an electric motor, and the electric motor being fastened to the casing and disposed inside of the hollow massage drum.

2. Massage device of claim 1, wherein a reduction gear is a reduction gear which output element is its terminal gear, and an input element is its primary gear.

3. Massage device of claim 2, wherein a reduction gear contains an idler gear fastened to a device casing.

4. Massage device of claim 1, wherein a reduction gear is a planetary reduction gear with a carrier fastened to a device casing, and its terminal gear is formed by its ring gear.

5. Massage device of claim 3, wherein a reduction gear is a planetary reduction gear with a carrier fastened to a device casing, and its terminal gear is designed as a satellite.

6. Massage device of claim 1, wherein a reduction gear is a combined reduction gear and consists of a belt reducer and a gear reducer connected in series, wherein a second base is connected to an output element designed as a terminal gear of a reduction gear, a primary gear is connected to an output shaft of a belt reducer, which primary pulley is an input element fastened to an electric motor.

7. Massage device of claim 1, wherein its end part has a control unit installed to adjust a rotation speed of an electric motor.

8. Massage device of claim 1, wherein a device contains a display configured to indicate massage device operation parameters.

9. Massage device of claim 1, wherein its elements are installed chequerwise on drum shafts.
